(19) **Europäisches Patentamt / European Patent Office / Office européen des brevets**

(11) **EP 4 576 599 A1**

(12) **DEMANDE DE BREVET EUROPEEN**

(43) Date de publication:
**25.06.2025 Bulletin 2025/26**

(21) Numéro de dépôt: **24221242.1**

(22) Date de dépôt: **18.12.2024**

(51) Classification Internationale des Brevets (IPC):
**H04B 7/04** *(2017.01)* **H04B 7/155** *(2006.01)*
**H04L 25/02** *(2006.01)*

(52) Classification Coopérative des Brevets (CPC):
**H04B 7/04013; H04B 7/15507; H04B 7/15528;
H04L 25/0204;** H04L 25/0212; H04L 25/022

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **20.12.2023 FR 2314603**

(71) Demandeur: **Commissariat à l'Energie Atomique
et aux Energies
Alternatives
75015 Paris (FR)**

(72) Inventeurs:
• **MUNOZ, Frédéric
38054 GRENOBLE CEDEX 9 (FR)**
• **D ERRICO, Raffaele
38054 GRENOBLE CEDEX 9 (FR)**

(74) Mandataire: **Lavoix
2, place d'Estienne d'Orves
75441 Paris Cedex 09 (FR)**

(54) **PROCÉDÉ D OPTIMISATION D'UNE SURFACE RECONFIGURABLE INTELLIGENTE**

(57) La présente invention concerne un procédé (60) d'optimisation d'une surface reconfigurable intelligente comprenant les étapes successives suivantes :
- pour une configuration courante de ladite surface reconfigurable intelligente, acquisition (62) d'au moins une mesure du canal multi-trajets de propagation associé au système de communication et/ou de localisation comprenant au moins ladite surface reconfigurable intelligente, au moins un émetteur et au moins un récepteur;
- à partir de ladite acquisition, estimation (64) dudit canal multi-trajets ;
- au sein de ladite estimation de canal multi-trajets, isolation (66) de la composante de ladite surface reconfigurable intelligente ;
- calcul (68) d'une fonction de coût en utilisant ladite composante isolée ;
lesdites étapes successives étant réitérées après modification, à chaque itération, de ladite configuration courante, jusqu'à atteindre un critère d'arrêt prédéterminé, la configuration optimale étant associée à l'itération dont la valeur de coût est maximale.

FIG.3

EP 4 576 599 A1

**EP 4 576 599 A1**

**Description**

La présente invention concerne un procédé d'optimisation d'une surface reconfigurable intelligente, ladite surface comprenant une pluralité d'éléments, chacun contrôlables en phase et/ou en amplitude, ladite surface reconfigurable intelligente étant propre à réfléchir ou transmettre des signaux entre au moins un émetteur et au moins un récepteur.

La présente invention concerne également un programme d'ordinateur comportant des instructions logicielles qui, lorsqu'elles sont exécutées par un ordinateur, mettent en oeuvre un tel procédé d'optimisation d'une surface reconfigurable intelligente.

La présente invention concerne également un système de communication et/ou de localisation comprenant au moins : au moins une surface reconfigurable intelligente, ladite surface comprenant une pluralité d'éléments, chacun contrôlable en phase et/ou en amplitude, ladite surface reconfigurable intelligente étant propre à réfléchir ou transmettre des signaux entre au moins un émetteur et au moins un récepteur, ledit au moins un émetteur, ledit au moins un récepteur.

La présente invention s'inscrit donc dans le domaine des surfaces intelligentes reconfigurables RIS (de anglais *Reconfigurable Intelligent Surface*), notamment pour des applications de télécommunications sans fils, de détection et de localisation, de minimisation à l'exposition aux ondes électromagnétique, ou pour des modifications de l'environnement électromagnétique.

Dans le contexte des liens de télécommunications aux longueurs d'ondes millimétriques ou « sub-terahertz » sub-THz, le blocage de liaison de communication directe (i.e. lien direct) dû aux obstacles est fortement présent, les surfaces intelligentes reconfigurables sont une solution technique pour étendre ces liaisons en redirigeant les ondes électromagnétiques et permettre ainsi de contourner les obstacles fixes.

Plus précisément, dans le contexte des réseaux 5G/6G (i.e. de cinquième et sixième génération respectivement), l'utilisation de surfaces intelligentes reconfigurables permet d'étendre la couverture réseau, et/ou d'améliorer la précision de géolocalisation, et/ou de minimiser l'exposition aux ondes électromagnétiques.

En particulier, dans les scénarios prévus dans le cadre de la 6G, les surfaces intelligentes reconfigurables font partie intégrante des technologies qui vont améliorer des services et solutions déjà existants dans la 5G tout en étant vouées à permettre l'émergence de nouvelles solutions.

Pour ce faire, l'optimisation de chaque surface intelligente reconfigurable est une étape cruciale.

Actuellement, pour des cas favorables, une telle optimisation est possible et mise en oeuvre au moyen d'une descente de gradient ou en utilisant une modélisation de cellules unitaires et une optimisation cellule par cellule avec des modèles plus ou moins complexes passant par exemple par des diagrammes de rayonnement canoniques, un modèle de surface équivalente radar ou encore un modèle d'impédance.

Expérimentalement, la mesure actuelle de canal de propagation en présence d'une surface intelligente reconfigurable est réduite au cas de figure simplifié de mesure en chambre anéchoïque et/ou avec des antennes directives et/ou avec de courtes distance entre antennes et surface intelligente reconfigurable qui ne correspondent pas à la mise en oeuvre réellement envisagée.

De plus, dans des cas expérimentaux, souvent idéaux, et différents de l'usage réellement envisagé d'une surface intelligente reconfigurable, il est possible de se passer d'optimisation ou de l'assujettir à un manuel (i.e. un « codebook ») listant les différents états possibles de la surface intelligente reconfigurable qui a été construit à partir de simulations et/ou de modélisations, ou encore la baser sur une métrique correspondant à une figure de mérite obtenue avec la fonction de transfert du canal incluant la contribution de la surface intelligente reconfigurable, souvent acquise sur quelques points de fréquence, cette métrique étant fortement perturbée en présence d'un canal de propagation riche en multitrajet (i.e. phénomène qui se produit lorsqu'un signal radio se propage par plusieurs chemins (i.e. trajets).

Cependant, en dehors de ces cas favorables, une telle optimisation peut s'avérer difficile dans des cas défavorables correspondant à des scénarios complexes, tels que des scénarios associés à une forte diversité de multitrajet, ou présentant un trajet, passant par la surface intelligente reconfigurable, négligeable par rapport au contexte.

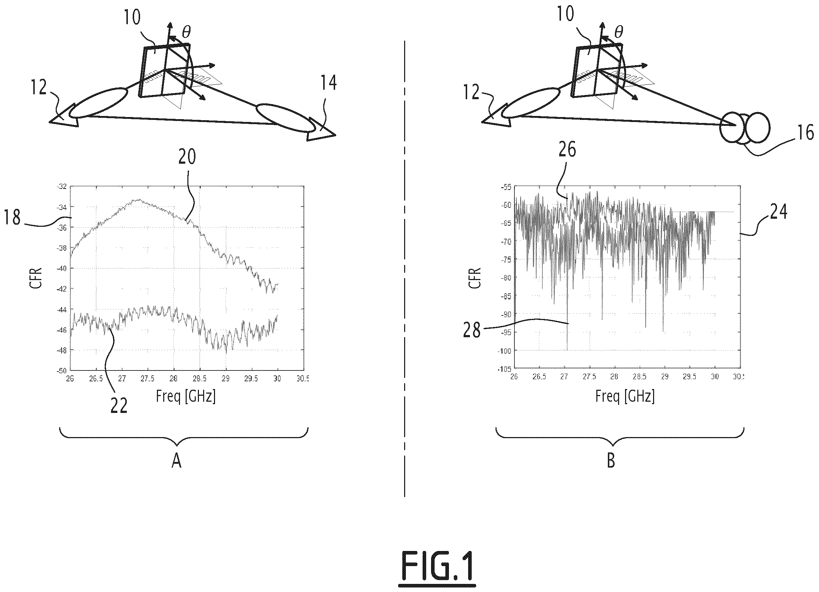

La figure 1 illustre une comparaison d'un cas favorable A et d'un cas défavorable B et les réponses fréquentielles, optimisées et non optimisées du canal CFR (de l'anglais *Channel Frequency Response*) associées.

Plus précisément, le cas favorable A correspond au scénario impliquant une surface intelligente reconfigurable 10, une antenne d'émission correspondant à un cornet 12 pointé sur la surface intelligente reconfigurable 10, une antenne de réception correspondant également à un cornet 14 pointé sur la surface intelligente reconfigurable 10.

Le cas défavorable B correspond au scénario impliquant également la surface intelligente reconfigurable 10, et l'antenne d'émission correspondant à un cornet 12 pointé sur la surface intelligente reconfigurable 10, mais une antenne de réception se rapprochant d'un récepteur omni directionnel 16 tel qu'un monopole.

La vue 18 illustre les réponses fréquentielles associées au cas favorable A, optimisées 20 et non optimisées 22 du canal CFR, tandis que la vue 24 illustre les réponses fréquentielles associées au cas défavorable B, optimisée 26 et non optimisée 28 du canal CFR.

Plus précisément, à une fréquence *f,* l'ensemble des $l \in [\![1:L]\!]$ trajets venant des directions $(\phi_l, \theta_l)$ avec des amplitudes complexes $\alpha_l$ et des retards $\tau_l$ ainsi que l'effet de la fonction de transfert $H_{RX}$ de l'antenne en réception donne l'expression suivante pour la réponses fréquentielles du canal CFR où on note $l_{RIS}$ l'indice du trajet venant de la surface intelligente reconfigurable:

$$CFR(f) = H_{RX}\left(\phi_{l_{RIS}}, \theta_{l_{RIS}}\right)\alpha_{l_{RIS}}e^{-j2\pi f \tau_{l_{RIS}}} + \sum_{l \in [\![1:L]\!] \backslash \{l_{RIS}\}} H_{RX}(\phi_l, \theta_l)\alpha_l e^{-j2\pi f \tau_l}$$

Ainsi dans le scénario « Défavorable » B où l'antenne de réception se rapproche d'un récepteur omni directionnel 16, i.e. $H_{RX}(\phi, \phi)$ = 1, le premier terme qui correspond à la contribution de la surface intelligente reconfigurable devient négligeable lorsque :

$$\left|H_{RX}\left(\phi_{l_{RIS}}, \theta_{l_{RIS}}\right)\alpha_{l_{RIS}}\right|^2 \ll \left|\sum_{l \in [\![1:L]\!] \backslash \{l_{RIS}\}} H_{RX}(\phi_l, \theta_l)\alpha_l\right|^2$$

donnant alors $CFR(f) \approx \sum_{l \in [\![1:L]\!] \backslash \{l_{RIS}\}} H_{RX}(\phi_l, \theta_l)\alpha_l e^{-j2\pi f \tau_l}$ . La modification et l'optimisation de la surface intelligente reconfigurable devient impossible car elle ne fait évoluer que le paramètre $\alpha_{l_{RIS}}$ (au premier ordre) qui fait partie du terme négligé.

En revanche, dans le scénario « Favorable » A où l'antenne en réception est un cornet 14 pointé sur la surface intelligente reconfigurable, on obtient approximativement :

$$\left|H_{RX}\left(\phi_{l_{RIS}}, \theta_{l_{RIS}}\right)\right|^2 \gg \left|\sum_{l \in [\![1:L]\!] \backslash \{l_{RIS}\}} H_{RX}(\phi_l, \theta_l)\right|^2$$

donnant la situation inverse où $CFR(f) \approx H_{RX}(\phi_{l_{RIS}}, \theta_{l_{RIS}})\alpha_{l_{RIS}}e^{-j2\pi f \tau_{l_{RIS}}}$, si bien que dans ce cas favorable, la réponse fréquentielle devient pertinente pour quantifier la contribution de la surface intelligente reconfigurable et faire son optimisation.

Autrement dit, les optimisations actuelles de surface intelligente reconfigurable adaptées à des cas favorables ne permettent pas de minimiser l'effet des multiples trajets (i.e. l'effet multitrajet) non influencés par la surface intelligente reconfigurable considérée, ni d'extraire son effet de tout contexte.

Le but de l'invention est alors d'améliorer l'optimisation d'une surface intelligente reconfigurable quels que soient les multi-trajets et antennes en présence durant la mesure, de sorte à couvrir des scénarios défavorables où la contribution de la surface intelligente reconfigurable au canal de propagation est minoritaire.

Autrement dit, la présente invention vise à proposer une solution pour optimiser une surface intelligente reconfigurable en minimisant, dans l'optimisation, l'effet des multi-trajets (i.e. trajets multiples) non influencés par la surface intelligente reconfigurable, et pour extraire l'effet de la surface intelligente reconfigurable de tout contexte.

A cet effet, l'invention a pour objet un procédé d'optimisation d'une surface reconfigurable intelligente, ladite surface comprenant une pluralité d'éléments, chacun contrôlable en phase et/ou en amplitude, ladite surface reconfigurable intelligente étant propre à réfléchir ou transmettre des signaux entre au moins un émetteur et au moins un récepteur, ledit procédé étant mis en oeuvre par un dispositif électronique et comprenant les étapes successives suivantes :

- acquisition d'au moins une mesure du canal multi-trajets de propagation associé au système de communication et/ou de localisation, ledit système comprenant au moins ladite surface reconfigurable intelligente, ledit au moins un émetteur et ledit au moins un récepteur, ladite acquisition étant mise en oeuvre pour une configuration courante de ladite surface reconfigurable intelligente ;
- à partir de ladite acquisition, estimation dudit canal multi-trajets ;
- au sein de ladite estimation de canal multi-trajets, isolation de la composante de ladite surface reconfigurable intelligente ;
- calcul d'une fonction de coût en utilisant ladite composante isolée de ladite surface reconfigurable intelligente;

lesdites étapes successives étant réitérées après modification, à chaque itération de l'ensemble desdites étapes successives, de ladite configuration courante de ladite surface reconfigurable intelligente, jusqu'à atteindre un critère d'arrêt prédéterminé, la configuration optimale de ladite surface reconfigurable intelligente étant associée à l'itération dont la valeur de coût est maximale.

Ainsi la présente invention se base sur une isolation des multi-trajets impliquant la surface intelligente reconfigurable (i.e. isolation du ou des trajets passant par la surface intelligente reconfigurable) puis sur une optimisation en tant que telle basée sur une fonction de coût associée à cette partie isolée des multi-trajets uniquement, ce qui permet de maximiser les capacités de la surface intelligente reconfigurable dans des contextes compliqués.

Suivant d'autres aspects avantageux de l'invention, le procédé d'optimisation d'une surface reconfigurable intelligente comprend une ou plusieurs des caractéristiques suivantes, prises isolément ou suivant toutes les combinaisons techniquement possibles :

- ledit critère d'arrêt est atteint dans au moins un des cas appartenant au groupe comprenant les cas où :

  - la valeur du coût associé à l'itération courante est inférieure ou égale à celle du coût associé à l'itération précédente ;
  - la valeur du coût associé à l'itération courante est supérieure à un seuil de coût prédéterminé ;
  - un maximum d'itérations effectuées est atteint ;
  - le rapport signal sur bruit est maximal ;
  - une valeur de débit prédéterminée est atteinte ;
  - l'erreur de localisation est minimale ;

- la configuration courante associée à la première itération est une configuration dans laquelle ladite surface reconfigurable intelligente est éteinte, chaque élément de ladite pluralité d'éléments étant inactivé ;
- ladite acquisition est directement la réponse temporelle dudit canal multi-trajets ; et
- ladite isolation est obtenue en utilisant un fenêtrage temporel prédéterminé de ladite réponse temporelle, ledit fenêtrage temporel fournissant la réponse temporelle isolée de ladite surface reconfigurable intelligente ; et
- ladite fonction de coût correspond à la moyenne sur une période temporelle prédéterminée de ladite réponse temporelle isolée de ladite surface reconfigurable intelligente ;

  ou
- ladite acquisition est fréquentielle, et
- ladite estimation de canal multi-trajets comprend la transformation, par transformée de Fourier inverse prédéterminée, de ladite acquisition fréquentielle en réponse temporelle dudit canal multi-trajets, et
- ladite isolation est obtenue en utilisant un fenêtrage temporel prédéterminé de ladite réponse temporelle, ledit fenêtrage temporel fournissant la réponse temporelle isolée de ladite surface reconfigurable intelligente ; et
- ladite réponse temporelle isolée de ladite surface reconfigurable intelligente est transformée, via une transformée de Fourier prédéterminée, en réponse fréquentielle isolée de ladite surface reconfigurable intelligente ; et
- ladite fonction de coût correspond à la moyenne sur la bande fréquentielle de ladite réponse fréquentielle isolée de ladite surface reconfigurable intelligente :
- ledit fenêtrage temporel correspond à une plage de temps centrée sur l'instant a *priori* associé à la mise en oeuvre de ladite composante de ladite surface reconfigurable intelligente au cours de ladite acquisition, la largeur de ladite plage de temps dépendant de la bande de fréquence de ladite acquisition ;
- ladite acquisition est fréquentielle et spatiale, et
- ladite estimation de canal multi-trajets correspond à une estimation haute résolution dudit canal multi-trajets, et
- ladite isolation est obtenue par différence entre l'estimation haute résolution obtenue à partir d'une configuration dans laquelle ladite surface reconfigurable intelligente est éteinte, chaque élément de ladite pluralité d'éléments étant inactivé, et l'estimation haute résolution obtenue à partir de ladite configuration courante de ladite surface reconfigurable intelligente, ladite configuration courante étant distincte de ladite configuration éteinte, et
- ladite fonction de coût correspond à l'estimation de la puissance relative de ladite composante de ladite surface reconfigurable intelligente dans ladite configuration courante ;
- ladite estimation haute résolution est mise en oeuvre en utilisant un algorithme d'estimation appartenant au groupe comprenant au moins les algorithmes suivants :

  - SAGE ou UWB-SAGE ;
  - RiMAX ;
  - MUSIC ;
  - ESPRIT;

- ladite estimation de canal multi-trajets est angulaire et mise en oeuvre via un réseau multi-antennes dudit au moins un récepteur, ledit réseau multi-antennes étant réel en comprenant un ensemble d'antennes unitaires réparties dans l'espace selon un agencement prédéterminé, ou virtuel en comprenant une seule antenne dont le trajet de communication est propre à être modifié dans ledit espace par déplacement de ladite seule antenne et/ou d'un autre élément dudit espace.

L'invention concerne également un programme d'ordinateur comportant des instructions logicielles qui, lorsqu'elles sont exécutées par un ordinateur, mettent en oeuvre un procédé d'optimisation d'une surface reconfigurable intelligente tel que défini ci-dessus.

A noter que dans ce cas particulier de mise en oeuvre par programme d'ordinateur par acquisition on entend uniquement l'obtention d'une mesure qui elle est effectuée par un dispositif de mesure distinct dudit ordinateur propre à mettre en oeuvre ledit programme d'ordinateur.

L'invention concerne également un système de communication et/ou de localisation comprenant au moins :

- au moins une surface reconfigurable intelligente, ladite surface comprenant une pluralité d'éléments, chacun contrôlable en phase et/ou en amplitude, ladite surface reconfigurable intelligente étant propre à réfléchir ou transmettre des signaux entre au moins un émetteur et au moins un récepteur,
- ledit au moins un émetteur,
- ledit au moins un récepteur,

ledit système de communication étant caractérisé en ce qu'il comprend en outre un dispositif électronique d'optimisation de ladite au moins une surface reconfigurable intelligente, ledit dispositif électronique d'optimisation comprenant :

- un module d'acquisition configuré pour acquérir, pour une configuration courante de ladite surface reconfigurable intelligente, au moins une mesure du canal multi-trajets de propagation associé audit système de communication comprenant au moins ladite surface reconfigurable intelligente ;
- un module d'estimation configuré pour estimer le canal multi-trajets à partir de ladite acquisition ;
- un module d'isolation configuré pour isoler, au sein de ladite estimation de canal multi-trajets, la composante de ladite au moins une surface reconfigurable intelligente ;
- un module de calcul configuré pour calculer une fonction de coût en utilisant ladite composante isolée de ladite surface reconfigurable intelligente ;

ledit dispositif étant propre à réitérer les étapes successives d'acquisition, d'estimation, d'isolation et de calcul, après modification, à chaque itération de l'ensemble desdites étapes successives, de ladite configuration courante de ladite surface reconfigurable intelligente, jusqu'à atteindre un critère d'arrêt prédéterminé, la configuration optimale de ladite surface reconfigurable intelligente étant associée à l'itération dont la valeur de coût est maximale

Suivant un autre aspect avantageux de l'invention, ledit au moins un récepteur comprend un réseau multi-antennes, ledit réseau multi-antennes étant réel en comprenant un ensemble d'antennes unitaires réparties dans l'espace selon un agencement prédéterminé, ou virtuel en comprenant une seule antenne dont le trajet de communication est propre à être modifié dans ledit espace par déplacement de ladite seule antenne et/ou d'un autre élément dudit espace.

L'invention apparaîtra plus clairement à la lecture de la description qui va suivre, donnée uniquement à titre d'exemple non limitatif, et faite en référence aux dessins dans lesquels :

[Fig. 1] la figure 1, décrite précédemment, illustre un cas favorable A, et un cas défavorable B, à l'optimisation selon l'état de la technique d'une surface reconfigurable intelligente ;
[Fig. 2] la figure 2 est une représentation schématique d'un système de communication et/ou de localisation selon la présente invention;
[Fig. 3] la figure 3 est un organigramme général du procédé d'optimisation d'une surface reconfigurable intelligente selon la présente invention;
[Fig. 4] [Fig. 5] les figures 4 et 5 illustrent deux variantes de réalisation du procédé représenté de manière général sur la figure 3.

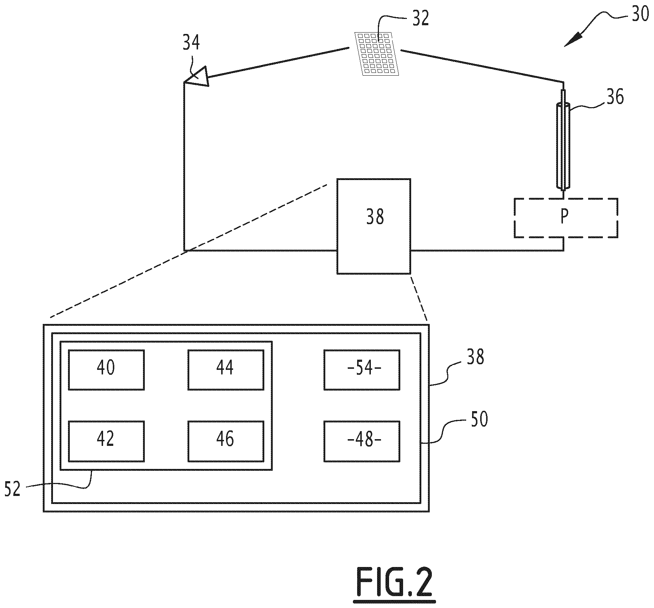

La figure 2 illustre tout d'abord schématiquement un exemple non limitatif d'un système 30 de communication et/ou de localisation selon la présente invention.

Selon la présente invention, un tel système 30 de communication et/ou de localisation comprend tout d'abord au moins une surface reconfigurable intelligente 32, ladite surface comprenant une pluralité d'éléments, chacun contrôlable en phase et/ou en amplitude, ladite surface reconfigurable intelligente étant propre à réfléchir ou transmettre des signaux entre au moins un émetteur 34 et au moins un récepteur 36.

A titre d'exemple, l'émetteur 34 est une station de base BS (de l'anglais Base *Station*) et le récepteur 36 est un terminal utilisateur UE (de l'anglais *User Equipment*).

De plus, tel qu'illustré par la figure 2, ledit système 30 de communication comprend également ledit au moins un émetteur 34 et ledit au moins un récepteur 36.

En outre spécifiquement selon la présente invention, ledit système de communication 30 comprend en outre un dispositif 38 électronique d'optimisation de ladite au moins une surface reconfigurable intelligente 32.

Un tel dispositif électronique d'optimisation 38 comprend tout d'abord un module d'acquisition 40 configuré pour acquérir, pour une configuration courante de ladite surface reconfigurable intelligente, au moins une mesure du canal multi-trajets de propagation associé audit système de communication 30 comprenant au moins ladite surface reconfigurable intelligente 32.

En outre, un tel dispositif électronique d'optimisation 38 comprend un module d'estimation 42 configuré pour estimer le canal multi-trajets à partir de ladite acquisition.

De plus, un tel dispositif électronique d'optimisation 38 comprend un module d'isolation 44 configuré pour isoler, au sein de ladite estimation de canal multi-trajets, la composante de ladite au moins une surface reconfigurable intelligente.

Par ailleurs, un tel dispositif électronique d'optimisation 38 comprend également un module de calcul 46 configuré pour calculer une fonction de coût en utilisant ladite composante isolée de ladite surface reconfigurable intelligente.

Au moyen desdits modules précités d'acquisition 40, d'estimation 42, d'isolation 44 et de calcul 46, ledit dispositif électronique d'optimisation 38 est propre à réitérer les étapes successives associées d'acquisition, d'estimation, d'isolation et de calcul, après modification, à chaque itération de l'ensemble desdites étapes successives, de ladite configuration courante de ladite surface reconfigurable intelligente 32, jusqu'à atteindre un critère d'arrêt prédéterminé, la configuration optimale de ladite surface reconfigurable intelligente 32 étant associée à l'itération dont la valeur de coût est maximale.

En complément facultatif, selon une première variante, non représentée, ledit au moins un récepteur 36 comprend un réseau multi-antennes, ledit réseau multi-antennes étant réel en comprenant un ensemble d'antennes unitaires réparties dans l'espace selon un agencement prédéterminé, par exemple sur une ligne, un cercle, au sein d'une surface carrée, etc.

Selon une deuxième variante de ce complément facultatif, ledit au moins un récepteur 36 comprend un réseau multi-antennes virtuel en comprenant une seule antenne dont le trajet de communication est propre à être modifié dans ledit espace par déplacement de ladite seule antenne et/ou d'un autre élément dudit espace. Autrement dit, un tel réseau multi-antennes est « virtuel » car obtenu à partir d'une seule antenne et par déplacement quelle que soit l'origine dudit déplacement à savoir par exemple le déplacement d'un utilisateur portant ledit récepteur 36, un déplacement dudit récepteur 36 via un positionneur P (optionnel représenté en pointillés) ou encore le déplacement d'un objet sur lequel le récepteur est posé, l'objet étant plus large que ledit récepteur 36, tel qu'une automobile, un train, etc., et propre à former un réseau avec l'unique antenne dudit récepteur 36.

Optionnellement, représentés en pointillés, ledit dispositif électronique d'optimisation 38 comprend en outre un module 48 de mesure, en tant que tel, dudit canal multi-trajets. Par exemple, un tel module de mesure 48, embarqué au sein dudit dispositif 38, est un analyseur de réseau vectoriel VNA (de l'anglais *Vector Network Analyser*) configuré pour acquérir au moins une mesure fréquentielle dudit canal de propagation et la transmettre audit module d'acquisition 40.

Dans l'exemple de la figure 2, le dispositif électronique d'optimisation 38 de ladite surface reconfigurable intelligente 32 comprend une unité 50 de traitement d'informations formée par exemple d'une mémoire 52 et d'un processeur 54 associé à la mémoire 52.

Dans l'exemple de la figure 2, le module d'acquisition, le module d'estimation, le module d'isolation et le module de calcul, sont réalisés chacun sous forme d'un logiciel, ou d'une brique logicielle, exécutable par le processeur 54. La mémoire 52 du dispositif électronique d'optimisation 38 de ladite surface reconfigurable intelligente 32 est alors apte à stocker un logiciel d'acquisition, un logiciel d'estimation, un logiciel d'isolation, et un logiciel de calcul. Le processeur est alors apte à exécuter chacun des logiciels parmi le logiciel d'acquisition, le logiciel d'estimation, le logiciel d'isolation et le logiciel de calcul.

En variante non représentée, le module d'acquisition, le module d'estimation, le module d'isolation et le module de calcul sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*).

Lorsque le dispositif électronique d'optimisation 38 de ladite surface reconfigurable intelligente 32 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

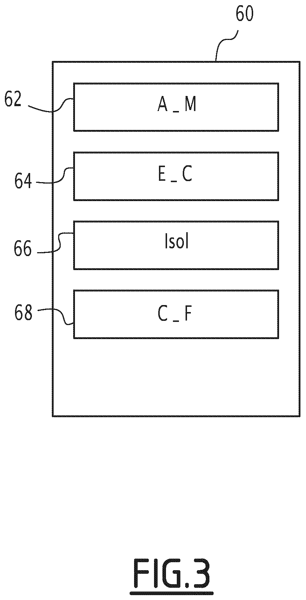

On décrit par la suite en relation avec la figure 3, un exemple de mode de réalisation général du fonctionnement du dispositif électronique d'optimisation 38 de ladite surface reconfigurable intelligente 32 de la figure 2.

Plus précisément, le procédé 60 d'optimisation d'une surface reconfigurable intelligente comprend globalement quatre étapes successives 62, 64, 66 et 68.

La première étape 62 est une étape d'acquisition A_M d'au moins une mesure du canal multi-trajets de propagation associé au système de communication et/ou de localisation dont un exemple est illustré en figure 2, ladite acquisition 62 étant mise en oeuvre pour une configuration courante de ladite surface reconfigurable intelligente.

Puis, à partir de ladite acquisition 62, le procédé 60 d'optimisation d'une surface reconfigurable intelligente comprend une deuxième étape 64 d'estimation E_C dudit canal multi-trajets.

Ensuite, le procédé 60 d'optimisation d'une surface reconfigurable intelligente comprend une étape 66 d'isolation *Isol* de la composante de ladite surface reconfigurable intelligente au sein de ladite estimation de canal multi-trajets.

Par « composante », on entend la partie, isolée au sein de l'estimation de canal multi-trajets, correspondant au(x) (i.e. égale au(x)) trajet(s) passant par ladite surface reconfigurable intelligente. Par la suite, ladite composante de ladite surface reconfigurable intelligente est également appelée « trajet RIS ».

Le procédé 60 d'optimisation d'une surface reconfigurable intelligente comprend ensuite une étape 68 de calcul C_F d'une fonction de coût en utilisant ladite composante isolée de ladite surface reconfigurable intelligente.

L'optimisation selon ledit procédé 60 est itérative, lesdites étapes successives 62, 64, 66, 68 étant réitérées par le dispositif 38, après modification (non représentée sur la figure 2), à chaque itération de l'ensemble desdites étapes successives, de ladite configuration courante de ladite surface reconfigurable intelligente, jusqu'à atteindre un critère d'arrêt prédéterminé, la configuration optimale de ladite surface reconfigurable intelligente étant associée à l'itération dont la valeur de coût est maximale.

Autrement dit, de manière générale, selon le procédé 60 de la présente invention, à partir d'une acquisition 62 du canal, le trajet de la surface reconfigurable intelligente est isolé 66, par exemple temporellement et/ou spatialement, et avec ou sans utilisation de la capacité de reconfigurabilité de la surface reconfigurable intelligente, puis à chaque itération, une modification de la configuration de la surface reconfigurable intelligente est appliquée, avec ou sans exploitation de l'information de canal précédemment obtenue, et une nouvelle acquisition 62 du canal est effectuée suite à cette modification, le trajet de la surface intelligente reconfigurable est extrait 66 (i.e. isolé) à nouveau et son évolution constatée au moyen de ladite fonction de coût, l'optimisation se poursuivant en rebouclant sur la modification (i.e. changement de configuration de la surface intelligente reconfigurable) jusqu'à ce que le niveau du trajet isolé soit considéré comme satisfaisant au moyen de ladite fonction de coût.

Par modification de la configuration courante de la surface reconfigurable intelligente on entend tout changement d'état d'au moins un élément de ladite surface reconfigurable intelligente y compris le changement d'état de tous les éléments à la fois notamment lorsque l'on passe de l'état « éteint » de ladite surface reconfigurable intelligente dans sa globalité à l'état « allumé ».

Ladite modification de la configuration courante de ladite surface reconfigurable intelligente est mise en oeuvre physiquement à chaque itération ou, selon un mode de réalisation non représenté, via une simulation, l'acquisition de mesure correspondant, dans ce cas de modification par simulation, à l'acquisition du résultat de simulation du canal de propagation associé au système de communication et/ou de localisation comprenant ladite surface reconfigurable intelligente simulée.

En complément facultatif, ledit critère d'arrêt du procédé itératif 60 est atteint dans au moins un des cas appartenant au groupe comprenant les cas où :

- la valeur du coût associé à l'itération courante est inférieure ou égale à celle du coût associé à l'itération précédente ;
- la valeur du coût associé à l'itération courante est supérieure à un seuil de coût prédéterminé ;
- un maximum d'itérations effectuées est atteint ;
- le rapport signal sur bruit est maximal ;
- une valeur de débit prédéterminée est atteinte ;
- l'erreur de localisation est minimale.

Par exemple, ledit seuil de coût est prédéterminé de sorte à répondre à un objectif d'augmentation de la composante de ladite surface reconfigurable intelligente (i.e. du trajet passant par la surface reconfigurable intelligente), à un objectif d'augmentation du bilan de liaison globale dudit système 30 de communication et/ou de localisation, à un objectif d'augmentation de la composante de ladite surface reconfigurable intelligente (i.e. du trajet passant par la surface reconfigurable intelligente) pour une distance et/ou un angle prédéterminé associé à une application de géolocalisation.

En complément facultatif, la configuration courante associée à la première itération est une configuration dans laquelle ladite surface reconfigurable intelligente est éteinte, chaque élément de ladite pluralité d'éléments étant inactivé.

Autrement dit, dans la configuration courante de ladite surface reconfigurable intelligente associée à la première itération, la surface intelligente reconfigurable est dans un état de configuration « i » qui est l'état « OFF ».

A titre d'alternative, la configuration courante de ladite surface reconfigurable intelligente associée à la première itération est une configuration « aléatoire ».

A l'itération suivante, la configuration suivante obtenue après modification, est par exemple une configuration arbitraire quelconque précédemment configurée à partir de l'itération précédente et distincte de la configuration associée à la première itération (i.e. ladite configuration correspondant à un état prédéfini).

Lors de l'itération suivante une nouvelle acquisition 62 du canal est effectuée, qui donne lieu à estimation 64 du canal.

Cette estimation 64 du canal qui dépend des mesures réalisées est propre à donner des informations sur les délais et/ou les directions d'arrivées et/ou les directions de départs et/ou des informations sur les vitesses et/ou les puissances des multi-trajets. Autrement dit, ladite estimation de canal 64 permet d'obtenir une décomposition du canal de propagation.

Au cours de l'étape 66 d'isolation de chaque itération, le trajet passant par la surface reconfigurable intelligente est isolé soit à partir d'une connaissance à priori de ses coordonnées ou bien à partir d'un « nettoyage » de la mesure qui elle-même peut être réalisé grâce à une connaissance à priori du canal de propagation ou bien à partir d'une déduction suite aux réponses de canal acquises lors des itérations précédentes.

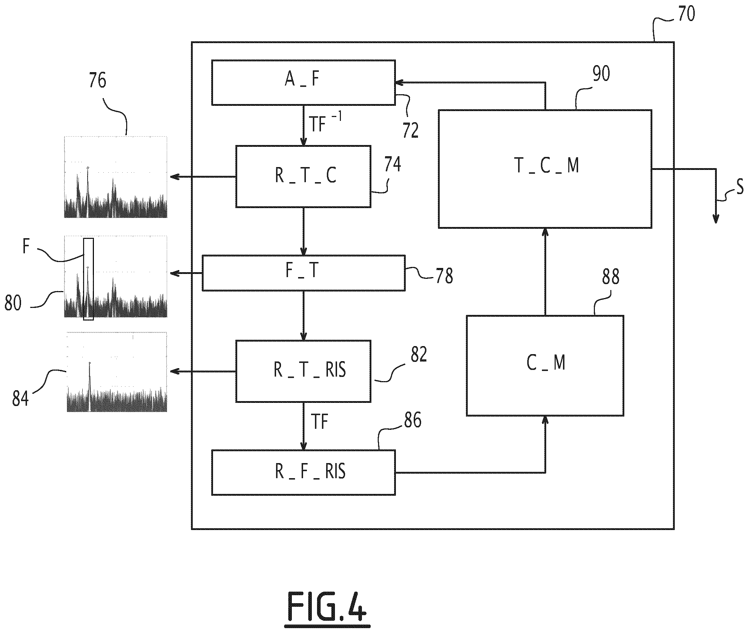

Une première variante 70 de mise en oeuvre dudit procédé est illustrée par la figure 4. Selon cette première variante 70, ladite étape 72 d'acquisition est une acquisition fréquentielle A_F.

Par exemple, une telle acquisition 72, sur le domaine fréquentiel seulement, est propre à être réalisée avec un analyseur de réseau vectoriel VNA (de l'anglais *Vector Network Analyser*) comme le dispositif de mesure 48 optionnel de la figure 2 décrite précédemment.

Selon cette première variante 70, l'étape d'estimation 64 de canal multi-trajets de la figure 3 comprend en outre une étape 74 de transformation, par transformée de Fourier inverse TF$^{-1}$ prédéterminée, de ladite acquisition fréquentielle A_F en réponse temporelle dudit canal multi-trajets R_T_C telle qu'illustrée par la vue 76.

Ladite isolation 66 du procédé général 60 de la figure 3 est obtenue selon la première variante 70 illustré par la figure 4 en utilisant une étape 78 de fenêtrage temporel F_T prédéterminé de ladite réponse temporelle.

La vue 80 illustre l'application dudit fenêtrage temporel et la fenêtre F utilisée.

Ledit fenêtrage temporel 78 fournit en sortie 82 la réponse temporelle isolée R_T_RIS de ladite surface reconfigurable intelligente illustrée par la vue 84.

En complément facultatif, ledit fenêtrage temporel correspond à une plage de temps centrée sur l'instant a priori associé à la mise en oeuvre de ladite composante de ladite surface reconfigurable intelligente au cours de ladite acquisition, la largeur de ladite plage de temps dépendant de la bande de fréquence de ladite acquisition.

Le fenêtrage temporel se fait autour de la valeur attendue ou estimée du trajet « RIS » (i.e. ladite composante de ladite surface reconfigurable intelligente) et consiste simplement à choisir une plage de temps centrée sur le trajet « RIS » avec une largeur liée à la bande de fréquence de l'acquisition.

Puis au cours d'une étape 86, ladite réponse temporelle isolée de ladite surface reconfigurable intelligente est transformée, via une transformée de Fourier TF prédéterminée, en réponse fréquentielle isolée de ladite surface reconfigurable intelligente R_F_RIS. On estime alors la réponse fréquentielle R_F_RIS du canal, uniquement associée à la surface intelligente reconfigurable. Une telle estimation est notée $\widehat{CFR}_{RIS}$ telle que :

$$\widehat{CFR}_{RIS}(f) = H_{RX}\hat{\alpha}_{l_{RIS}}e^{-j2\pi f\hat{\tau}_{l_{RIS}}}.$$

L'étape 88 selon la première variante 70 illustrée par la figure 4 correspond à l'étape 68 de la représentation générale du procédé selon la figure 3, à savoir l'étape de calcul C_M d'une fonction de coût en utilisant ladite composante isolée de ladite surface reconfigurable intelligente. Plus précisément, selon cette première variante 70, ladite fonction de coût correspond à la moyenne sur la bande fréquentielle de ladite réponse fréquentielle isolée de ladite surface reconfigurable intelligente. Autrement dit, le calcul de fonction de coût associé revient à déterminer la moyenne sur la bande de la réponse fréquentielle du canal « RIS » telle que : $Co\hat{u}t = \sum_f |\widehat{CFR}_{RIS}(f)|$.

Autrement dit, selon la présente invention, avantageusement la fonction de coût porte uniquement sur la partie de l'estimation de canal associé au(x) trajet(s) passant par la surface reconfigurable intelligente, et non sur l'ensemble du canal tel que connu de l'état de la technique.

Au cours de l'étape 90, un test T_C_M du résultat de ladite fonction de coût est effectué afin de déterminer si oui ou non l'optimisation de la surface reconfigurable intelligente est poursuivie au moyen d'une modification de celle-ci.

Plus précisément, la modification de la surface intelligente reconfigurable cherche à augmenter le paramètre $\alpha_{IRIS}$ représentatif de la composante isolée de ladite surface reconfigurable intelligente, et est conditionnée au critère d'arrêt correspondant au fait que le *Coût(i)* associé à l'itération d'indice i soit supérieur à celui de l'itération précédente d'indice i-1, ce qui revient à : *Coût(i) > Coût(i - 1)*, sinon le procédé d'optimisation 70 s'arrête selon la flèche de sortie S, c'est-à-dire si le coût n'augmente pas d'une itération à l'autre.

Dans l'affirmative, la modification de la surface intelligente reconfigurable est mise en oeuvre pour fournir une nouvelle configuration de la surface intelligente reconfigurable prise en compte à l'itération suivante d'indice i+1.

Ainsi, après une telle modification de la surface intelligente reconfigurable, avec ou sans exploitation de l'information de canal précédemment obtenue, l'itération suivante d'indice i+1 des étapes 72, 74, 78, 82, 86, 88, et 90 est mise en oeuvre et ainsi de suite jusqu'à l'arrêt du procédé d'optimisation selon la flèche de sortie S.

Ainsi pour résumer, selon cette première variante 70 illustrée par la figure 4, il est possible d'optimiser efficacement la surface reconfigurable intelligente avec seulement une acquisition fréquentielle 72 du canal. L'isolation du trajet RIS est réalisé par un fenêtrage temporel et l'optimisation de la surface intelligente reconfigurable est réalisée par une fonction de coût de moyenne sur réponse fréquentielle du canal « RIS » et comparaison entre itérations.

Selon une deuxième variante, ladite acquisition 62 de la figure 3 est directement l'acquisition de la réponse temporelle dudit canal multi-trajets, notamment pour un système de communication et/ou de localisation dit impulsionnel où la réponse impulsionnelle du canal est directement obtenue, ce qui permet d'éviter le passage par transformation de Fourier inverse $TF^{-1}$ et transformation de Fourier TF de la figure 4, à savoir les étapes 74 et 86 précitées.

Selon cette deuxième variante, ladite isolation est obtenue en utilisant un fenêtrage temporel prédéterminé de ladite réponse temporelle, ledit fenêtrage temporel fournissant la réponse temporelle isolée de ladite surface reconfigurable intelligente, et ladite fonction de coût correspond à la moyenne sur une période temporelle prédéterminée de ladite réponse temporelle isolée de ladite surface reconfigurable intelligente.

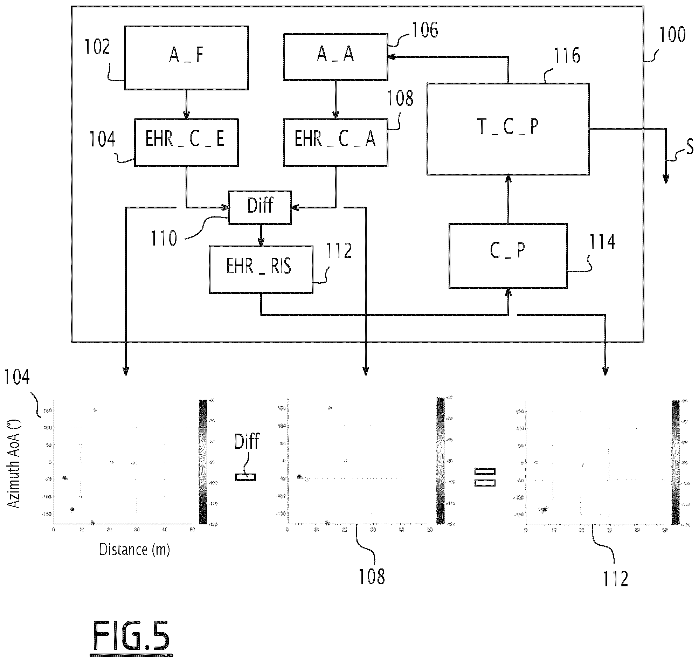

Une troisième variante 100 de mise en oeuvre dudit procédé 60 selon sa représentation générale de la figure 3 est illustrée par la figure 5.

Selon cette troisième variante, ladite acquisition est fréquentielle et spatiale. Par exemple, l'acquisition du canal est effectuée sur le domaine fréquentiel, à l'aide d'un analyseur de réseau vectoriel VNA (de l'anglais *Vector Network Analyser*) comme le dispositif de mesure 48 optionnel de la figure 2 décrite précédemment, mais aussi spatial grâce au déplacement du récepteur (e.g. un terminal utilisateur UE (de l'anglais *User Equipement*)) réalisé par exemple avec le positionneur P présent sur la figure 2 pour former un réseau multi-antennes dit virtuel.

De plus, selon cette troisième variante 100, ladite estimation de canal multi-trajets correspond à une estimation haute résolution dudit canal multi-trajets.

En complément facultatif, ladite estimation haute résolution est mise en oeuvre en utilisant un algorithme d'estimation appartenant au groupe comprenant au moins les algorithmes suivants :

-   SAGE introduit par B. H Fleury et al. en 1996 dans l'article intitulé « Wideband angle of arrival estimation using the SAGE algorithm » ;
-   RiMAX introduit par T. Reiner et al. en 2004 dans l'article intitulé « RIMAX-A maximum likelihood framework for parameter estimation in multidimensional channel sounding»;
-   MUSIC introduit par R. Schmidt en 1986 dans l'article intitulé « Multiple emitter location and signal parameter estimation » ;
-   ESPRIT introduit par R. Roy et al. en 1989 dans l'article intitulé « ESPRIT-Estimation of signal parameters via rotational invariance techniques» ;
-   etc.

En outre, selon cette troisième variante 100, ladite isolation est obtenue par différence entre l'estimation haute résolution obtenue à partir d'une configuration dans laquelle ladite surface reconfigurable intelligente est éteinte, chaque élément de ladite pluralité d'éléments étant inactivé, et l'estimation haute résolution obtenue à partir de ladite configuration courante de ladite surface reconfigurable intelligente, ladite configuration courante étant distincte de ladite configuration éteinte.

Ainsi, tel qu'illustré par la figure 5, la troisième variante 100 comprend d'une part les étapes 102 et 104 correspondant respectivement à l'acquisition A_E fréquentielle et spatiale d'une mesure du canal pour une configuration dans laquelle ladite surface reconfigurable intelligente est éteinte, et à l'estimation haute résolution de canal associée EHR_C_E illustrée en bas de figure 5 par la vue correspondante de même référence 104, notamment en utilisant l'algorithme haute résolution UWB-SAGE tel qu'appliqué selon K. Haneda et al. en 2003 dans l'article intitulé « An application of SAGE algorithm for UWB propagation channel estimation », et d'autre part les étapes 106 et 108 correspondant respectivement à l'acquisition A_A fréquentielle et spatiale d'une mesure du canal pour une configuration courante de ladite surface reconfigurable intelligente distincte de ladite configuration éteinte, et à l'estimation haute résolution de canal associée EHR_C_A illustrée en bas de figure 5 par la vue correspondante de même référence 108, notamment en utilisant l'algorithme haute résolution UWB-SAGE tel qu'appliqué selon K. Haneda et al. en 2003 dans l'article intitulé « An application of SAGE algorithm for UWB propagation channel estimation ».

Les étapes 102 et 104 d'une part, et 106 et 108 d'autre part, sont propres à être mises en oeuvre successivement, notamment du fait qu'il s'agit d'une configuration éteinte puis allumée de la surface reconfigurable intelligente sans modification unitaire en tant que telle d'un ou d'une partie des éléments de la surface intelligente reconfigurable entre l'état éteint et allumé qui s'applique globalement à l'ensemble de la surface intelligente reconfigurable.

L'étape 110 est une étape de détermination de la différence *Diff* entre ces deux estimation haute résolution de canal EHR_C_E et EHR_C_A obtenues à partir de deux configurations distinctes de la surface intelligente reconfigurable comprenant la configuration éteinte.

L'estimation EHR_RIS haute résolution du canal limité à la surface intelligente reconfigurable (i.e. l'estimation isolée) est obtenue au cours de l'étape 112 telle qu'illustré par la vue de même référence en bas de figure 5, et correspond au résultat de cette différence *Diff.*

Au cours de l'étape 114, le calcul C_P de la fonction de coût utilisant ladite estimation EHR_RIS haute résolution du canal limité à la surface intelligente reconfigurable est mis en oeuvre, ladite fonction de coût correspondant, selon cette troisième variante 100, à l'estimation de la puissance relative de ladite composante de ladite surface reconfigurable intelligente, à savoir ladite estimation EHR_RIS haute résolution du canal limité à la surface intelligente reconfigurable dans ladite configuration courante.

Puis au cours de l'étape 116, un test T_C_P du résultat de ladite fonction de coût est effectué afin de déterminer si oui ou non l'optimisation de la surface reconfigurable intelligente est poursuivie au moyen d'une modification de celle-ci, utilisée ensuite lors de l'itération suivante en réitérant les étapes 102, 104 avec la surface reconfigurable intelligente modifiée éteinte, puis allumée pour les étapes 106 et 108.

Plus précisément, la modification de la surface intelligente reconfigurable cherche à augmenter le paramètre $\alpha_{IRIS}$ représentatif de la composante isolée de ladite surface reconfigurable intelligente, et est conditionnée au critère d'arrêt correspondant au fait que le *Coût(i)* associé à l'itération d'indice i soit supérieur à celui de l'itération précédente d'indice i-1, ce qui revient à : *Coût(i) > Coût(i - 1)*, sinon le procédé d'optimisation 100 s'arrête selon la flèche de sortie S, c'est-à-dire si le coût n'augmente pas d'une itération à l'autre.

Autrement dit, pour résumer, la troisième variante 100 de mise en oeuvre illustrée par la figure 5 est basée sur deux estimations haute résolution de canal successives en état éteint puis en état allumé (i.e. surface intelligente reconfigurable RIS en états ON/OFF) d'une même surface intelligente reconfigurable RIS, puis une isolation par différence entre ces deux estimations haute résolution du multi-trajet lié à la surface reconfigurable intelligente.

Plus précisément, mathématiquement, ici l'algorithme haute résolution utilisé permet d'obtenir une estimation de la réponse fréquentielle du canal (fréquence et position du récepteur car un réseau virtuel en réception est obtenu par déplacement du récepteur notamment via le positionneur P optionnel illustré par la figure 2 précédemment décrite) tel que :

$$\widehat{CFR}(f,m) = H_{RX}\left(\hat{\phi}_{l_{RIS}}, \hat{\theta}_{l_{RIS}}\right)\hat{\alpha}_{l_{RIS}}e^{-j2\pi f\hat{\tau}_{l_{RIS}}}e^{-j2\pi\frac{\vec{e}\left(\hat{\phi}_{l_{RIS}},\hat{\theta}_{l_{RIS}}\right)\cdot\vec{r}_m}{\lambda}}$$

$$+ \sum_{l\in[\![1:L]\!]\setminus\{l_{RIS}\}} H_{RX}\left(\hat{\phi}_{l}, \hat{\theta}_{l}\right)\hat{\alpha}_{l}e^{-j2\pi f\hat{\tau}_{l}}e^{-j2\pi\frac{\vec{e}\left(\hat{\phi}_{l},\hat{\theta}_{l}\right)\cdot\vec{r}_m}{\lambda}}$$

Où m est l'indice de la position du récepteur lors de son déplacement avec le positionneur P, $\vec{r}_m$ est le vecteur position du récepteur, $\vec{e}(\phi, \theta)$ est le vecteur unitaire orienté selon $(\phi, \theta)$ avec $\phi$ l'angle en azimut et $\theta$ l'angle en élévation, ^indique un paramètre estimé par l'algorithme haute résolution et $\lambda$ est la longueur d'onde.

L'isolation du multi-trajet RIS consiste à ne garder que le terme où la surface reconfigurable intelligente contribue :

$$\widehat{CFR}_{RIS}(f,m) = H_{RX}\left(\hat{\phi}_{l_{RIS}}, \hat{\theta}_{l_{RIS}}\right)\hat{\alpha}_{l_{RIS}}e^{-j2\pi f\hat{\tau}_{l_{RIS}}}e^{-j2\pi\frac{\vec{e}\left(\hat{\phi}_{l_{RIS}},\hat{\theta}_{l_{RIS}}\right)\cdot\vec{r}_m}{\lambda}}$$

Pour identifier le terme de contribution de la surface reconfigurable intelligente RIS, on considère donc le cas où une fois la surface reconfigurable intelligente éteinte (i.e. état OFF) on a bien $\alpha_{IRIS\ OFF} \approx 0$, et il est proposé de mettre en oeuvre, avant ou après, une estimation avec la surface reconfigurable intelligente allumée (i.e. état ON) afin d'obtenir, à partir de la différence entre ces estimations associées à ces deux états globaux éteint/allumé de la surface reconfigurable intelligente, la partie uniquement dépendante de la surface reconfigurable intelligente :

$$\widehat{CFR}_{RIS}(f,m) = \widehat{CFR}_{RIS\,ON}(f,m) - \widehat{CFR}_{RIS\,OFF}(f,m)$$

Enfin l'optimisation du trajet passant par la surface intelligente reconfigurable est effectuée une fois l'évolution attendue du trajet idoine constatée, ici on cherche donc à maximiser $\left|\widehat{CFR}_{RIS}(f,m)\right|$. Cette optimisation est effectuée simplement par comparaison d'une itération à l'autre ou bien avec des méthodes de descente de gradient pour une optimisation locale. Pour des optimisations globales il faut envisager des approches connues plus systématiques telles que par exemple une recherche sur une grille de paramètre, etc.

En complément ou à titre d'alternative, selon une quatrième variante, non représentée, ladite estimation de canal multi-trajets est angulaire et mise en oeuvre via un réseau multi-antennes dudit au moins un récepteur, ledit réseau multi-antennes étant réel en comprenant un ensemble d'antennes unitaires réparties dans l'espace selon un agencement prédéterminé, ou virtuel en comprenant une seule antenne dont le trajet de communication est propre à être modifié dans ledit espace par déplacement de ladite seule antenne et/ou d'un autre élément dudit espace.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de résoudre le problème d'optimisation d'une surface intelligente reconfigurable dans des cas de figures non explorés jusqu'ici dans l'état de la technique, en se basant sur une isolation du ou des trajet(s) provenant de la surface intelligente reconfigurable puis une optimisation uniquement à partir du résultat de cette isolation.

On obtient ainsi une optimisation d'une surface reconfigurable intelligente ou de plusieurs surfaces intelligentes reconfigurables dans des scénarios complexes. La solution d'optimisation de surface reconfigurable intelligente proposée est en outre applicable aux optimisations de telles surface reconfigurable intelligente en transmission et/ou en réflexion et rend possible ou améliore une localisation et cartographie possible ou amélioré.

## Revendications

**1.** Procédé (60) d'optimisation d'une surface reconfigurable intelligente, ladite surface comprenant une pluralité d'éléments, chacun contrôlable en phase et/ou en amplitude, ladite surface reconfigurable intelligente étant propre à réfléchir ou transmettre des signaux entre au moins un émetteur et au moins un récepteur, ledit procédé étant mis en oeuvre par un dispositif électronique et comprenant les étapes successives suivantes :

- acquisition (62) d'au moins une mesure du canal multi-trajets de propagation associé au système de communication et/ou de localisation, ledit système comprenant au moins ladite surface reconfigurable intelligente, ledit au moins un émetteur et ledit au moins un récepteur, ladite acquisition étant mise en oeuvre pour une configuration courante de ladite surface reconfigurable intelligente ;
- à partir de ladite acquisition, estimation (64) dudit canal multi-trajets ;
- au sein de ladite estimation de canal multi-trajets, isolation (66) de la composante de ladite surface reconfigurable intelligente ;
- calcul (68) d'une fonction de coût en utilisant uniquement ladite composante isolée de ladite surface reconfigurable intelligente;

lesdites étapes successives (62, 64, 66, 68) étant réitérées après modification, à chaque itération de l'ensemble desdites étapes successives, de ladite configuration courante de ladite surface reconfigurable intelligente, jusqu'à atteindre un critère d'arrêt prédéterminé, la configuration optimale de ladite surface reconfigurable intelligente étant associée à l'itération dont la valeur de coût est maximale.

**2.** Procédé selon la revendication 1, dans lequel ledit critère d'arrêt est atteint dans au moins un des cas appartenant au groupe comprenant les cas où :

- la valeur du coût associé à l'itération courante est inférieure ou égale à celle du coût associé à l'itération précédente ;
- la valeur du coût associé à l'itération courante est supérieure à un seuil de coût prédéterminé ;
- un maximum d'itérations effectuées est atteint ;
- le rapport signal sur bruit est maximal ;
- une valeur de débit prédéterminée est atteinte ;
- l'erreur de localisation est minimale.

**3.** Procédé selon la revendication 1 ou 2, dans lequel la configuration courante associée à la première itération est une configuration dans laquelle ladite surface reconfigurable intelligente est éteinte, chaque élément de ladite pluralité d'éléments étant inactivé.

**4.** Procédé selon l'une quelconque des revendications précédentes, dans lequel :

- ladite acquisition est directement la réponse temporelle dudit canal multi-trajets ; et
- ladite isolation est obtenue en utilisant un fenêtrage temporel prédéterminé de ladite réponse temporelle, ledit fenêtrage temporel fournissant la réponse temporelle isolée de ladite surface reconfigurable intelligente ; et
- ladite fonction de coût correspond à la moyenne sur une période temporelle prédéterminée de ladite réponse temporelle isolée de ladite surface reconfigurable intelligente ;
ou
- ladite acquisition est fréquentielle, et
- ladite estimation de canal multi-trajets comprend la transformation, par transformée de Fourier inverse prédéterminée, de ladite acquisition fréquentielle en réponse temporelle dudit canal multi-trajets, et
- ladite isolation est obtenue en utilisant un fenêtrage temporel prédéterminé de ladite réponse temporelle, ledit fenêtrage temporel fournissant la réponse temporelle isolée de ladite surface reconfigurable intelligente ; et
- ladite réponse temporelle isolée de ladite surface reconfigurable intelligente est transformée, via une transformée de Fourier prédéterminée, en réponse fréquentielle isolée de ladite surface reconfigurable intelligente ; et
- ladite fonction de coût correspond à la moyenne sur la bande fréquentielle de ladite réponse fréquentielle isolée de ladite surface reconfigurable intelligente.

**5.** Procédé selon la revendication 4, dans lequel ledit fenêtrage temporel correspond à une plage de temps centrée sur l'instant a *priori* associé à la mise en oeuvre de ladite composante de ladite surface reconfigurable intelligente au cours de ladite acquisition, la largeur de ladite plage de temps dépendant de la bande de fréquence de ladite acquisition.

**6.** Procédé selon la revendication 1 ou 2, dans lequel :

- ladite acquisition est fréquentielle et spatiale, et
- ladite estimation de canal multi-trajets correspond à une estimation haute résolution dudit canal multi-trajets, et
- ladite isolation est obtenue par différence entre l'estimation haute résolution obtenue à partir d'une configuration dans laquelle ladite surface reconfigurable intelligente est éteinte, chaque élément de ladite pluralité d'éléments étant inactivé, et l'estimation haute résolution obtenue à partir de ladite configuration courante de ladite surface reconfigurable intelligente, ladite configuration courante étant distincte de ladite configuration éteinte, et
- ladite fonction de coût correspond à l'estimation de la puissance relative de ladite composante de ladite surface reconfigurable intelligente dans ladite configuration courante.

**7.** Procédé selon la revendication 6, dans lequel ladite estimation haute résolution est mise en oeuvre en utilisant un algorithme d'estimation appartenant au groupe comprenant au moins les algorithmes suivants :

- SAGE ou UWB-SAGE ;
- RiMAX ;
- MUSIC ;
- ESPRIT.

**8.** Procédé selon l'une quelconque des revendications précédentes 1 à 3, dans lequel ladite estimation de canal multi-trajets est angulaire et mise en oeuvre via un réseau multi-antennes dudit au moins un récepteur, ledit réseau multi-antennes étant réel en comprenant un ensemble d'antennes unitaires réparties dans l'espace selon un agencement prédéterminé, ou virtuel en comprenant une seule antenne dont le trajet de communication est propre à être modifié dans ledit espace par déplacement de ladite seule antenne et/ou d'un autre élément dudit espace.

**9.** Programme d'ordinateur comportant des instructions logicielles qui, lorsqu'elles sont exécutées par un ordinateur, mettent en oeuvre un procédé d'optimisation d'une surface reconfigurable intelligente selon l'une quelconque des revendications précédentes.

**10.** Système (30) de communication et/ou de localisation comprenant au moins :

- au moins une surface reconfigurable intelligente (32), ladite surface comprenant une pluralité d'éléments, chacun contrôlable en phase et/ou en amplitude, ladite surface reconfigurable intelligente étant propre à réfléchir ou transmettre des signaux entre au moins un émetteur (34) et au moins un récepteur (36),
- ledit au moins un émetteur (34),
- ledit au moins un récepteur (36),

ledit système de communication étant **caractérisé en ce qu'**il comprend en outre un dispositif (38) électronique d'optimisation de ladite au moins une surface reconfigurable intelligente, ledit dispositif électronique d'optimisation comprenant :

- un module d'acquisition (40) configuré pour acquérir, pour une configuration courante de ladite surface reconfigurable intelligente, au moins une mesure du canal multi-trajets de propagation associé audit système de communication comprenant au moins ladite surface reconfigurable intelligente;
- un module d'estimation (42) configuré pour estimer le canal multi-trajets à partir de ladite acquisition;
- un module d'isolation (44) configuré pour isoler, au sein de ladite estimation de canal multi-trajets, la composante de ladite au moins une surface reconfigurable intelligente ;
- un module de calcul (46) configuré pour calculer une fonction de coût en utilisant uniquement ladite composante isolée de ladite surface reconfigurable intelligente;

ledit dispositif étant propre à réitérer les étapes successives d'acquisition, d'estimation, d'isolation et de calcul, après modification, à chaque itération de l'ensemble desdites étapes successives, de ladite configuration courante de ladite surface reconfigurable intelligente, jusqu'à atteindre un critère d'arrêt prédéterminé, la configuration optimale de ladite surface reconfigurable intelligente étant associée à l'itération dont la valeur de coût est maximale.

11. Système de communication et/ou de localisation selon la revendication 10 dans lequel ledit au moins un récepteur comprend un réseau multi-antennes, ledit réseau multi-antennes étant réel en comprenant un ensemble d'antennes unitaires réparties dans l'espace selon un agencement prédéterminé, ou virtuel en comprenant une seule antenne dont le trajet de communication est propre à être modifié dans ledit espace par déplacement de ladite seule antenne et/ou d'un autre élément dudit espace.

FIG.1

FIG.2

60

| |
|---|
| A_M |
| E_C |
| Isol |
| C_F |

62

64

66

68

**FIG.3**

FIG.4

FIG.5

EP 4 576 599 A1

**EP 4 576 599 A1**

Europäisches
Patentamt

European
Patent Office

Office européen
des brevets

# RAPPORT DE RECHERCHE EUROPEENNE

**Numéro de la demande**

EP 24 22 1242

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZHANG JINGWEN ET AL: "Energy-Efficient Multiuser Localization in the RIS-Assisted IoT Networks", IEEE INTERNET OF THINGS JOURNAL, IEEE, vol. 9, no. 20, 19 mai 2022 (2022-05-19), pages 20651-20665, XP011922426, DOI: 10.1109/JIOT.2022.3176633 | 1-3,6-11 | INV. H04B7/04 H04B7/155 H04L25/02 |
| A | * abrégé * <br> * Section II * <br> * Section III * <br> * Section IV, Algorithm 1 * <br> ----- | 4,5 | |
| X | CHEN YALI ET AL: "Reconfigurable Intelligent Surface Assisted Device-to-Device Communications", IEEE TRANSACTIONS ON WIRELESS COMMUNICATIONS, IEEE SERVICE CENTER, PISCATAWAY, NJ, US, vol. 20, no. 5, 21 décembre 2020 (2020-12-21), pages 2792-2804, XP011853286, ISSN: 1536-1276, DOI: 10.1109/TWC.2020.3044302 [extrait le 2021-05-07] * abrégé * <br> * figure 1 * <br> * Section III * <br> * Section IV * <br> * Section V Algorithm 2 * <br> ----- <br> -/-- | 1,8-11 | **DOMAINES TECHNIQUES RECHERCHES (IPC)** <br><br> H04B H04L |

Le présent rapport a été établi pour toutes les revendications

| Lieu de la recherche | Date d'achèvement de la recherche | Examinateur |
|---|---|---|
| Munich | 23 avril 2025 | Palacián Lisa, Marta |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P04C02)

page 1 de 2

| | Europäisches Patentamt<br>European Patent Office<br>Office européen des brevets | **RAPPORT DE RECHERCHE EUROPEENNE** | **Numéro de la demande**<br><br>EP 24 22 1242 |
|---|---|---|---|

## DOCUMENTS CONSIDERES COMME PERTINENTS

| Catégorie | Citation du document avec indication, en cas de besoin,<br>des parties pertinentes | Revendication concernée | CLASSEMENT DE LA DEMANDE (IPC) |
|---|---|---|---|
| X | Rx ET AL: "Special Topic: Reconfigurable Intelligent Surface (RIS) Transmitter Receiver",<br>,<br>1 janvier 2022 (2022-01-01), XP093019537,<br>Extrait de l'Internet:<br>URL:https://res-www.zte.com.cn/mediares/magazine/publication/com_en/pdf/en202201.pdf<br>[extrait le 2023-01-31]<br>* Paper on pages 7-17: sections 2.2, 2.3 *<br>- - - - - | 1,3,9,10 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 23 avril 2025 | Palacián Lisa, Marta |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. H FLEURY et al.** *Wideband angle of arrival estimation using the SAGE algorithm*, 1996
- **T. REINER et al.** *RIMAX-A maximum likelihood framework for parameter estimation in multidimensional channel sounding*, 2004
- **R. SCHMIDT**. *Multiple emitter location and signal parameter estimation*, 1986
- **R R. ROY et al.** *ESPRIT-Estimation of signal parameters via rotational invariance techniques*, 1989
- **K. HANEDA et al.** *An application of SAGE algorithm for UWB propagation channel estimation*, 2003